# EUROPEAN PATENT APPLICATION

(11) **EP 4 549 477 A1**
(43) Date of publication of application: **07.05.2025**
(21) Application number: 23831500.6
(22) Date of filing: 28.06.2023
(51) Int. Cl.: C08F 236/04

(54) **DIENE-BASED POLYMER RUBBER**

(30) Priority: 01.07.2022 JP 2022107001
(71) Applicant: Zeon Corporation, Tokyo 100-8246 (JP)
(72) Inventor: GOTO, Kunihiro, Tokyo 100-8246 (JP)
(74) Representative: Maiwald GmbH
(86) International application number: PCT/JP2023/023947
(87) International publication number: WO 2024/005060

(57) **Abstract**

Provided is a diene polymer rubber comprising a diene monomer unit and a (meth)acrylic acid ester monomer unit, wherein a content of the (meth)acrylic acid ester monomer unit is 1 to 40% by weight.

## Description

### TECHNICAL FIELD

The present invention relates to a diene polymer rubber, and more particularly, relates to a diene polymer rubber that can provide a cross-linked rubber that has excellent frictional performance on ice and shows high compatibility with water.

### BACKGROUND ART

A diene polymer rubber is produced by emulsion polymerization which is performed in the presence of an emulsifier in an aqueous medium, or by solution polymerization which is performed in an organic solvent using an anion polymerization catalyst or the like, and is used in various applications. For example, the diene polymer rubber is suitably used in various applications such as rubber materials for tires and rubber materials for shoe soles.

For example, Patent Document 1 discloses a rubber composition used for tire applications and having an improved frictional force on ice, wherein the rubber composition is obtained by combining 20 to 70 parts by mass of at least one filler selected from the group consisting of carbon black and a white filler, and 1 to 30 parts by mass of a spherical and non-hollow (meth)acrylic acid alkyl ester polymer having a particle size of 0.1 µm to 100 µm, with respect to 100 parts by mass of the diene rubber. However, the technology of Patent Document 1 described above has a limitation in the effect of improving frictional force on ice, and there is a need for further improving frictional force on ice (frictional performance on ice).

### RELATED ART DOCUMENT

### PATENT DOCUMENT

Patent Document 1: JP 2012-158710 A

### SUMMARY OF THE INVENTION

### PROBLEM TO BE SOLVED BY THE INVENTION

The present invention has been completed in view of solving the problem above. An objective of the present invention is to provide a diene polymer rubber that can provide a cross-linked rubber showing high compatibility with water and therefore, for example, having excellent frictional performance on ice.

### MEANS FOR SOLVING THE PROBLEM

As a result of research to achieve the aforementioned objective, the present inventor has found that the aforementioned problem can be solved by a diene polymer rubber containing a (meth)acrylic acid ester monomer unit in a specific content, thereby accomplishing the present invention.

That is, according to the present invention, a diene polymer rubber and a method for producing the diene polymer rubber described below are provided.
[1] A diene polymer rubber comprising a diene monomer unit and a (meth)acrylic acid ester monomer unit,
   wherein a content of the (meth)acrylic acid ester monomer unit is 1 to 40% by weight.
[2] The diene polymer rubber according to [1], wherein the diene polymer rubber has a glass transition temperature of -100 to -50°C.
[3] The diene polymer rubber according to [1] or [2], wherein the (meth)acrylic acid ester monomer unit is a (meth)acrylic acid alkoxyalkyl ester monomer unit.
[4] The diene polymer rubber according to any one of [1] to [3], wherein the diene polymer rubber has a sliding angle of 38° or more.
[5] A method for producing the diene polymer rubber according to any one of [1] to [4], comprising:
   polymerizing a monomer mixture comprising a diene monomer and a (meth)acrylic acid ester monomer in the presence of an emulsifier in an aqueous medium.

### EFFECTS OF THE INVENTION

The present invention can provide a diene polymer rubber that can provide a cross-linked rubber that has excellent frictional performance on ice and shows high compatibility with water.

### DESCRIPTION OF EMBODIMENTS

A diene polymer rubber according to the present invention comprises a diene monomer unit and a (meth)acrylic acid ester monomer unit,
wherein a content of the (meth)acrylic acid ester monomer unit is 1 to 40% by weight.

Examples of diene monomers forming the diene monomer unit include, but are not particularly limited to, conjugated diene monomers such as 1,3-butadiene, isoprene, 2,3-dimethyl-1,3-butadiene, 2-chloro-1,3-butadiene, 2-phenyl-1,3-butadiene, 1,3-pentadiene, and 1,3-hexadiene; nonconjugated diene monomers such as 1,5-hexadiene, 1,6-heptadiene, 1,7-octadiene, dicyclopentadiene, and 5-ethylidene-2-norbornene; and the like. Among these, the conjugated diene monomers are preferred, 1,3-butadiene and isoprene are more preferred, and 1,3-butadiene is still more preferred. These diene monomers may be used alone or in combination of two or more.

The content of the diene monomer unit in the diene polymer rubber according to the present invention is preferably 60 to 99% by weight, more preferably 70 to 97% by weight, still more preferably 75 to 95% by weight, particularly preferably 80 to 93% by weight. When the content of the diene monomer unit is controlled to be 60% by weight or more, a cross-linked rubber to be obtained can have sufficient rubber elasticity. Also, when the content of the diene monomer unit is controlled to be 99% by weight or less, frictional performance on ice and compatibility with water of the cross-linked rubber to be obtained can be further enhanced.

A vinyl bond content in the diene monomer unit in the diene polymer rubber according to the present invention is preferably 5 to 30 mol%, more preferably 8 to 20 mol%, still more preferably 10 to 20 mol%, particularly preferably 13 to 18 mol%. When the vinyl bond content in the diene monomer unit is controlled to be the aforementioned upper limit or less, a decrease in performance on ice due to an increase in rubber hardness can be appropriately suppressed. On the other hand, when the vinyl bond content in the diene monomer unit is controlled to be the aforementioned lower limit or more, polymer strength can be further enhanced.

Examples of (meth)acrylic acid ester monomers [This term refers to acrylic acid ester monomers and/or methacrylic acid ester monomers. Hereinafter, this applies to methyl (meth)acrylate and the like.] forming the (meth)acrylic acid ester monomer unit include, but are not particularly limited to, (meth)acrylic acid alkyl ester monomers, (meth)acrylic acid alkoxyalkyl ester monomers, and the like. From the viewpoint of high compatibility with water, (meth)acrylic acid alkoxyalkyl ester monomers are preferred.

Preferred (meth)acrylic acid alkyl ester monomers are, but not particularly limited to, esters of an alkanol having 1 to 12 carbon atoms and (meth)acrylic acid (specifically, (meth)acrylic acid esters having an alkyl group having 1 to 12 carbon atoms), more preferred are esters of an alkanol having 1 to 8 carbon atoms and (meth)acrylic acid (specifically, (meth)acrylic acid esters having an alkyl group having 1 to 8 carbon atoms), and still more preferred are esters of an alkanol having 2 to 6 carbon atoms and (meth)acrylic acid (specifically, (meth)acrylic acid esters having an alkyl group having 2 to 6 carbon atoms) .

Specific examples of (meth)acrylic acid alkyl ester monomers include methyl (meth)acrylate, ethyl (meth)acrylate, n-propyl (meth)acrylate, isopropyl (meth)acrylate, n-butyl (meth)acrylate, isobutyl (meth)acrylate, n-hexyl (meth)acrylate, 2-ethylhexyl (meth) acrylate, cyclohexyl (meth)acrylate, and the like. Among these, ethyl (meth)acrylate and n-butyl (meth)acrylate are preferred, ethyl acrylate and n-butyl acrylate are more preferred, and n-butyl acrylate is still more preferred. These can be used alone or in combination of two or more.

Preferred (meth)acrylic acid alkoxyalkyl ester monomers are, but not particularly limited to, esters of an alkoxyalkyl alcohol having 2 to 12 carbon atoms and (meth)acrylic acid (specifically, (meth)acrylic acid esters having an alkoxyalkyl group having 2 to 12 carbon atoms), more preferred are esters of an alkoxyalkyl alcohol having 2 to 8 carbon atoms and (meth)acrylic acid (specifically, (meth)acrylic acid esters having an alkoxyalkyl group having 2 to 8 carbon atoms), and particularly preferred are esters of an alkoxyalkyl alcohol having 2 to 6 carbon atoms and (meth)acrylic acid (specifically, (meth)acrylic acid esters having an alkoxyalkyl group having 2 to 6 carbon atoms).

Specific examples of (meth)acrylic acid alkoxyalkyl ester monomers include methoxymethyl (meth)acrylate, ethoxymethyl (meth)acrylate, 2-methoxyethyl (meth)acrylate, 2-ethoxyethyl (meth)acrylate, 2-propoxyethyl (meth)acrylate, 2-butoxyethyl (meth)acrylate, 3-methoxypropyl (meth)acrylate, 4-methoxybutyl (meth)acrylate, and the like. Among these, 2-ethoxyethyl (meth)acrylate and 2-methoxyethyl (meth)acrylate are preferred, 2-ethoxyethyl acrylate and 2-methoxyethyl acrylate are more preferred, and 2-methoxyethyl acrylate is particularly preferred. These can be used alone or in combination of two or more.

The content of the (meth)acrylic acid ester monomer unit in the diene polymer rubber according to the present invention is 1 to 40% by weight, preferably 3 to 30% by weight, more preferably 5 to 25% by weight, still more preferably 7 to 20% by weight. If the content of the (meth)acrylic acid ester monomer unit is too small, a cross-linked rubber to be obtained becomes inferior in compatibility with water and frictional performance on ice. On the other hand, if the content is too large, a cross-linked rubber to be obtained exhibits inferior rubber elasticity.

Further, the diene polymer rubber according to the present invention may contain an aromatic vinyl monomer unit in addition to the conjugated diene monomer unit and the (meth)acrylic acid ester monomer unit. Examples of aromatic vinyl monomers for forming the aromatic vinyl monomer unit include styrene, methylstyrene, ethylstyrene, t-butylstyrene, α-methylstyrene, α-methyl-p-methylstyrene, chlorostyrene, bromostyrene, methoxystyrene, dimethylaminomethylstyrene, dimethylaminoethylstyrene, diethylaminomethylstyrene, diethylaminoethylstyrene, cyanoethylstyrene, vinylnaphthalene, and the like. Among these, styrene is preferred.

The content of the aromatic vinyl monomer unit in the diene polymer rubber according to the present invention is preferably 1 to 25% by weight, more preferably 3 to 20% by weight, still more preferably 5 to 15% by weight.

Further, the diene polymer rubber according to the present invention may contain an additional monomer unit in addition to the conjugated diene monomer unit, (meth)acrylic acid ester monomer unit, and the aromatic vinyl monomer unit contained as required. Examples of additional compounds constituting such an additional monomer unit include chain olefin compounds such as ethylene, propylene, and 1-butene; cyclic olefin compounds such as cyclopentene and 2-norbornene; α,β-ethylenically unsaturated monocarboxylic acids such as (meth)acrylic acid, ethylacrylic acid, crotonic acid, and cinnamic acid; α,β-ethylenically unsaturated polyvalent carboxylic acids such as butenedioic acids such as fumaric acid and maleic acid, itaconic acid, citraconic acid, mesaconic acid, glutaconic acid, allylmalonic acid, and teraconic acid; anhydrides of α,β-unsaturated polyvalent carboxylic acids such as maleic anhydride, anhydride of itaconic acid, and citraconic anhydride; α,β-ethylenically unsaturated dicarboxylic acid monoesters, such as monomethyl maleate, monoethyl maleate, monopropyl maleate, mono-n-butyl maleate, monocyclopentyl maleate, monocyclohexyl maleate, monocycloheptyl maleate, fumaric acid monoalkyl esters such as monomethyl fumarate, monoethyl fumarate, monopropyl fumarate, and mono-n-butyl fumarate, and fumaric acid monocycloalkyl esters such as monocyclopentyl fumarate, monocyclohexyl fumarate, and monocycloheptyl fumarate; and the like.

The form of monomer units bonded in the diene polymer rubber according to the present invention may be any of various bonding forms such as block, tapered, and random forms. The bonding form is preferably the random form. In the case of the random form, a cross-linked rubber to be obtained can have further enhanced frictional performance on ice and compatibility with water.

The diene polymer rubber according to the present invention has a glass transition temperature (Tg) of preferably -100 to -50°C, more preferably -95 to -60°C, still more preferably-90 to -70°C, particularly preferably -80 to -70°C. If the glass transition temperature is too low, the diene polymer rubber becomes inferior in processability. On the other hand, if the glass transition temperature is too high, a cross-linked rubber to be obtained becomes inferior in frictional performance on ice. The glass transition temperature of the diene polymer rubber can be controlled, for example, by a method of selecting the type of the (meth)acrylic acid ester monomer used, a method of adjusting the content of the (meth)acrylic acid ester monomer unit, a method of adjusting the vinyl bond content, or a method of adjusting the type and the amount of an additional monomer unit such as the aromatic vinyl monomer unit.

The Mooney viscosity (ML1+4) of the diene polymer rubber according to the present invention is preferably 10 to 200, more preferably 20 to 150, particularly preferably 30 to 80. When the Mooney viscosity is within the above ranges, the processability is better. The Mooney viscosity (ML1+4) is measured at 100°C in accordance with JIS K6300-1:2013.

The diene polymer rubber according to the present invention can be produced by any method without particular limitation, and can be produced by copolymerizing the diene monomer and the (meth)acrylic acid ester monomer. The polymerization method is not particularly limited, and known emulsion polymerization and solution polymerization can be used. From the viewpoint of industrial productivity, emulsion polymerization is preferred. That is, a method of polymerizing a monomer mixture comprising the diene monomer and the (meth)acrylic acid ester monomer in the presence of an emulsifier in an aqueous medium is preferred. In the emulsion polymerization, a polymerization initiator and a molecular weight modifier can be used other than the emulsifier, and in addition to these, polymerization auxiliary materials usually used can be used.

The emulsifier is not particularly limited, but a carboxylic acid-based emulsifier can be suitably used. Examples of the carboxylic acid-based emulsifier include fatty acid soap, rosin acid soap, and the like. As the fatty acid soap, a sodium or potassium salt of a long-chain aliphatic carboxylic acid having 12 to 18 carbon atoms, for example, lauric acid, myristic acid, palmitic acid, stearic acid, or oleic acid, and a mixture of these aliphatic carboxylic acids can be used. Examples of the rosin acid soap include sodium or potassium salts of natural rosin such as gum rosin, wood rosin, tall oil rosin, or the like which is disproportionated or hydrogenated. Examples of the natural rosin include those mainly containing abietic acid, levopimaric acid, parastrinic acid, dehydroabietic acid, tetrahydroabietic acid, neoabietic acid, and the like. The amount of the emulsifier to be used is preferably 0.05 to 10 parts by weight, more preferably 0.5 to 5 parts by weight with respect to 100 parts by weight of the monomers used in the polymerization.

The polymerization initiator may be any polymerization initiator that is a radical initiator. Examples thereof include inorganic peroxides such as potassium persulfate, sodium persulfate, ammonium persulfate, potassium perphosphate, and hydrogen peroxide; organic peroxides such as t-butyl peroxide, cumene hydroperoxide, p-menthane hydroperoxide, t-butylcumyl peroxide, acetyl peroxide, isobutyryl peroxide, octanoyl peroxide, dibenzoyl peroxide, 3,5,5-trimethylhexanoyl peroxide, t-butylperoxyisobutyrate, and diisopropylbenzene hydroperoxide; azo compounds such as azobisisobutyronitrile, azobis-2,4-dimethylvaleronitrile, azobiscyclohexanecarbonitrile, and methyl azobisisobutyrate; and the like. These polymerization initiators can be used alone or in combination of two or more. As the polymerization initiator, an inorganic or organic peroxide is preferred. When a peroxide is used as the polymerization initiator, the peroxide can be used in combination with a reducing agent as a redox-type polymerization initiator. The reducing agent is not particularly limited. Examples thereof include compounds containing reduced metal ions such as ferrous sulfate and cuprous naphthenate; sulfinates such as sodium hydroxymethanesulfinate; sulfites such as sodium sulfite, potassium sulfite, sodium hydrogen sulfite, aldehyde sodium hydrogen sulfite, and potassium hydrogen sulfite; and the like. The amount of the polymerization initiator to be added is preferably 0.01 to 2 parts by weight with respect to 100 parts by weight of the monomers used in the polymerization.

The molecular weight modifier is not particularly limited. Examples thereof include α-methylstyrene dimer; mercaptans such as t-dodecyl mercaptan, n-dodecyl mercaptan, and octyl mercaptan; halogenated hydrocarbons such as carbon tetrachloride, methylene chloride, and methylene bromide; sulfur-containing compounds such as tetraethylthiuram disulfide, dipentamethylenethiuram disulfide, and diisopropylxanthogen disulfide, and the like. Among these, mercaptans are preferred, and t-dodecyl mercaptan is more preferred. These molecular weight modifiers may be used alone or in combination of two or more. Although the amount of the molecular weight modifier to be used depends on its type, it is preferably 0.1 to 1.5 parts by weight, more preferably 0.2 to 1.0 parts by weight with respect to 100 parts by weight of the monomers to be used in the polymerization.

For the medium of emulsion polymerization, an aqueous medium such as water is usually used. The amount of the aqueous medium is preferably 80 to 500 parts by weight, more preferably 80 to 300 parts by weight with respect to 100 parts by weight of the monomers used in the polymerization.

In the emulsion polymerization, it is possible to further use, if necessary, polymerization auxiliary materials such as a stabilizer, a dispersant, a pH adjuster, a deoxidizer, and a particle size adjuster. When these are used, the types and the amounts used thereof are not particularly limited.

Examples of methods of adding the monomers include a method of adding the monomers to be used into a reaction vessel all at once, a method of adding monomers continuously or intermittently as the polymerization proceeds, a method of adding a portion of the monomers to allow them to be reacted to a specific conversion ratio and then adding the remaining monomers continuously or intermittently to complete polymerization, and the like. Any one of these methods may be employed. In the case of mixing the monomers and thereafter adding the mixture continuously or intermittently, the composition of the mixture may be fixed or varied. Further, the monomers to be used may be mixed in advance and then added into the reaction vessel, or may be separately added into the reaction vessel.

Any polymerization temperature during emulsion polymerization can be used without particular limitation. It is usually 0 to 95°C, preferably 5 to 70°C. Any polymerization time can be used without particular limitation. It is usually about 5 to 40 hours.

Any polymerization terminator usually used in emulsion polymerization can be used without particular limitation. Specific examples thereof include hydroxyamine compounds such as hydroxylamine, hydroxyamine sulfate, diethylhydroxyamine, and hydroxyamine sulfonic acid and alkali metal salts thereof; sodium dimethyldithiocarbamate; hydroquinone derivatives; catechol derivatives; aromatic hydroxydithiocarboxylic acid compounds such as aromatic hydroxydithiocarboxylic acids such as hydroxydimethylbenzenethiocarboxylic acid, hydroxydiethylbenzenedithiocarboxylic acid, and hydroxydibutylbenzenedithiocarboxylic acid and alkali metal salts thereof; and the like. The polymerization terminator can be used in any amount without particular limitation, but it is usually 0.05 to 2 parts by weight with respect to 100 parts by weight of the monomers to be used in polymerization.

To a copolymer latex obtained by the emulsion polymerization, an antioxidant such as a phenol-based stabilizer, a phosphorus-based stabilizer, and a sulfur-based stabilizer is added as needed, and then the latex undergoes coagulation by salting out or alcohol, filtration, drying, and the like, allowing the diene polymer rubber according to the present invention to be obtained. In this case, the filtration and the drying steps subsequent to the coagulation can be performed by known methods, respectively. The amount of the antioxidant is preferably 0.05 to 2 parts by weight with respect to 100 parts by weight of the diene polymer rubber or 100 parts by weight of the monomers to be used in polymerization.

The diene polymer rubber according to the present invention has a sliding angle (dynamic contact angle) of preferably 38° or more, more preferably 40° or more, still more preferably 42° or more, particularly preferably 44° or more. The upper limit of the sliding angle is not particularly limited, but usually 65° or less. The sliding angle (dynamic contact angle) can be defined by a procedure in which 2 µL of a water droplet is dropped on the diene polymer rubber shaped in a predetermined shape, the diene polymer rubber is gradually tilted at a constant speed, and then the angle at which the water droplet starts to slide is measured. A greater sliding angle indicates better wettability by water and higher compatibility with water. In the present invention, the sliding angle (dynamic contact angle) of a rubber composition and the cross-linked rubber to be obtained using the diene polymer rubber according to the present invention is preferably within the above ranges. Specifically, the sliding angle (dynamic contact angle) of the rubber composition obtained using the diene polymer rubber according to the present invention and that of the cross-linked rubber thereof are preferably 38° or more, more preferably 40° or more, still more preferably 42° or more, particularly preferably 44° or more. The upper limit of the sliding angle is not particularly limited, but usually 65° or less.

### <Rubber composition>

A rubber composition can be obtained by adding a cross-linking agent to the diene polymer rubber according to the present invention.

Examples of the cross-linking agent include sulfur, sulfur-containing compounds such as halogenated sulfur, organic peroxides, quinone dioximes, organic polyvalent amine compounds, alkylphenol resins having a methylol group, and the like. Among these, sulfur is preferably used. The amount of the cross-linking agent is preferably 0.1 to 15 parts by weight, more preferably 0.5 to 5 parts by weight, particularly preferably 1 to 4 parts by weight with respect to 100 parts by weight of the polymer component in the rubber composition.

The rubber composition according to the present invention may contain a filler. Examples thereof include silica, calcium silicate, aluminum silicate, carbon black, calcium carbonate, talc, aluminum hydroxide, alumina, clay, mica, and the like. Among these, from the viewpoint of further enhancing frictional performance on ice and compatibility with water of the cross-linked rubber to be obtained, carbon black and silica are preferred, and silica is more preferred. These fillers can be used alone or in combination of two or more.

Examples of silica include dry process white carbon, wet process white carbon, colloidal silica, precipitated silica, calcium silicate, aluminum silicate, and the like. Among these, preferred is wet process white carbon mainly composed of hydrous silicic acid. Further, a carbon-silica dual phase filler in which silica is supported on the carbon black may be used. These silicas can be used alone or in combination of two or more. The nitrogen adsorption specific surface area of the silica to be used (measured by the BET method in accordance with ASTM D3037-81) is preferably 20 to 400m²/g, more preferably 50 to 220m²/g, particularly preferably 80 to 170m²/g. The pH of the silica is preferably 5 to 10.

Examples of carbon black include furnace black, acetylene black, thermal black, channel black, and graphite. Examples of channel black include EPC, MPC, and CC. Examples of furnace carbon black include SAF, ISAF, HAF, MAF, FEF, SRF, GPF, APF, FF, CF, SCF and ECF. Examples of thermal black include FT and MT. These carbon blacks can be used alone or in combination of two or more.

The amount of the filler in the rubber composition according to the present invention is preferably 5 to 90 parts by weight, more preferably 10 to 70 parts by weight, still more preferably 20 to 65 parts by weight with respect to 100 parts by weight of the polymer component in the rubber composition. When the amount of the filler is controlled within the above ranges, the rubber composition can have sufficient processability while the cross-linked rubber to be obtained can have further improved wear resistance, frictional performance on ice, and compatibility with water in a good balance.

From the viewpoint of further improving effects of cut resistance, reinforcing properties, and low loss properties of the cross-linked rubber to be obtained, a silane coupling agent may be further added to the rubber composition according to the present invention. The silane coupling agent is not particularly limited, and a variety of silane coupling agents can be used. In the present invention, a sulfide-based, mercapto-based, blocked mercapto-based (for example, those that have a carbonylthio group), thiocyanate-based, vinyl-based, amino-based, methacrylate-based, glycidoxy-based, nitro-based, epoxy-based, or chloro-based silane coupling agent can be suitably used. Specific examples of the silane coupling agent include bis(3-(triethoxysilyl)propyl)disulfide, bis(3-triethoxysilylpropyl)trisulfide, bis(3-(triethoxysilyl)propyl)tetrasulfide, bis(3-triethoxysilylpropyl)polysulfide, γ-mercaptopropyltriethoxysilane, 3-[ethoxybis(3,6,9,12,15-pentaoxaoctacosane-1-yloxy)silyl]-1-propanethiol, 3-octanoylthio-1-propyl-triethoxysilane, 3-trimethoxysilylpropyl-N,N-dimethylthiocarbamoyl tetrasulfide, γ-trimethoxysilylpropylbenzothiazyl tetrasulfide, 3-trimethoxysilylpropylbenzothiazole tetrasulfide, 3-thiocyanatepropyltriethoxysilane, vinyltriethoxysilane, N-(β-aminoethyl)-γ-aminopropyltrimethoxysilane, 3-trimethoxysilylpropylmethacrylate monosulfide, γ-glycidoxypropyltriethoxysilane, 3-nitropropyltrimethoxysilane, β-(3,4-epoxycyclohexyl)ethyltrimethoxysilane, 3-chloropropyltrimethoxysilane; and the like. Further, NXT-Z100, NXT-Z30, NXT-Z45, NXT-Z60, NXT-Z45, and NXT available from Momentive Performance Materials Inc., Si69, Si75, VP Si363 available from Evonik Degussa Corporation, and the like can be used. These silane coupling agents can be used alone or in combination of two or more. One or two or more of these may be oligomerized in advance, and used in an oligomerized state. The amount of the silane coupling agent is preferably 0.1 to 30 parts by weight, more preferably 1 to 15 parts by weight with respect to 100 parts by weight of the filler.

The rubber composition according to the present invention may contain an additional polymer other than the diene polymer rubber according to the present invention described above. Such additional polymers may be, for example, natural rubber (which may be modified natural rubber such as epoxidized natural rubber (ENR), hydrogenated natural rubber (HNR), deproteinized natural rubber (DPNR), high-purity natural rubber (UPNR), and grafted natural rubber), polyisoprene rubber, emulsion polymerization styrene-butadiene copolymer rubber, solution polymerization styrene-butadiene copolymer rubber, polybutadiene rubber (which may be high cis BR or low cis BR, and may be polybutadiene rubber containing crystal fibers composed of 1,2-polybutadiene polymer.), styrene-isoprene copolymer rubber, butadiene-isoprene copolymer rubber, styrene-isoprene-butadiene copolymer rubber, acrylonitrile-butadiene copolymer rubber, acrylonitrile-styrene-butadiene copolymer rubber, butyl rubber (IIR), ethylene-propylene copolymer, chloroprene rubber, nitrile chloroprene rubber, nitrile isoprene rubber, and the like, where the conjugated diene polymers described above are excluded. Among these, natural rubber, polyisoprene rubber, polybutadiene rubber, and solution polymerization styrene-butadiene copolymer rubber are preferred, and natural rubber and polybutadiene rubber are more preferred. These polymers can be used alone or in combination of two or more. For example, natural rubber and polybutadiene rubber, and natural rubber and styrene-butadiene copolymer rubber can be used in combination.

Further, in the rubber composition according to the present invention, in addition to the above-mentioned components, necessary amounts of compounding agents such as a cross-linking accelerator, a cross-linking activator, an antioxidant, an activator, a process oil, a plasticizer, a lubricant, and a tackifier may be added in a conventional manner.

In the case where sulfur or a sulfur-containing compound is used as the cross-linking agent, a cross-linking accelerator and a cross-linking activator are preferably used together. Examples of the cross-linking accelerator include sulfenamide-based cross-linking accelerators; guanidine-based cross-linking accelerators; thiourea-based cross-linking accelerators; thiazole-based cross-linking accelerators; thiuram-based cross-linking accelerators; dithiocarbamic acid-based cross-linking accelerators; xanthic acid-based cross-linking accelerators; and the like. Among these, those containing a sulfenamide-based cross-linking accelerator are preferred. These cross-linking accelerators are used alone or in combination of two or more. The amount of the cross-linking accelerator to be added is preferably 0.1 to 15 parts by weight, more preferably 0.5 to 5 parts by weight, particularly preferably 1 to 4 parts by weight with respect to 100 parts by weight of the polymer component in the rubber composition.

Examples of the cross-linking activator include higher fatty acids such as stearic acid; zinc oxide; and the like. These cross-linking activators may be used alone or in combination of two or more. The amount of the cross-linking activator to be added is preferably 0.05 to 20 parts by weight, particularly preferably 0.5 to 15 parts by weight with respect to 100 parts by weight of the polymer component in the rubber composition.

To obtain the rubber composition according to the present invention, the components may be kneaded according to an ordinary method. For example, a target composition can be obtained by kneading components other than thermally unstable components, such as a cross-linking agent and a cross-linking accelerator, with polymer components containing the diene polymer rubber according to the present invention, and then mixing the thermally unstable components, such as a cross-linking agent and a cross-linking accelerator, with the kneaded product. The kneading temperature of the components other than the thermally unstable components and the polymer components containing the diene polymer rubber according to the present invention is preferably 80 to 200°C, more preferably 100 to 180°C, and the kneading time is preferably 30 seconds to 30 minutes. The kneaded product and the thermally unstable components are mixed after the material is cooled down to usually 100°C or lower, preferably 80°C or lower.

### <Cross-linked rubber>

The cross-linked rubber can be obtained by cross-linking the rubber composition containing the diene polymer rubber according to the present invention described above.

The cross-linked rubber according to the present invention can be produced as follows: the rubber composition containing the diene polymer rubber according to the present invention described above is used, the composition is formed by, for example, using a forming machine corresponding to the desired shape, such as an extruder, an injection molding machine, a compressor, or a roll, the formed product is heated to be subjected to a cross-linking reaction, and thus the shape of the formed product is fixed to produce the cross-linked rubber. In this case, the cross-linking may be performed after preliminarily performing the forming, or alternatively, the forming and the cross-linking may also be performed simultaneously. The forming temperature is usually 10 to 200°C, preferably 20 to 120°C. The cross-linking temperature is usually 100 to 200°C, preferably 130 to 190°C, and the cross-linking time is usually 1 minute to 24 hours, preferably 2 minutes to 12 hours, particularly preferably 3 minutes to 6 hours.

Further, depending on the shape, size, and the like of the cross-linked rubber, sometimes, even if the surface is cross-linked, the inside part is not sufficiently cross-linked, so it is possible to further heat the rubber for secondary cross-linking.

As the heating method, a general method which is used for cross-linking rubber such as press heating, steam heating, oven heating, or hot air heating may be suitably selected.

The cross-linked rubber according to the present invention thus obtained has excellent frictional performance on ice and shows high compatibility with water because it is obtained by using the diene polymer rubber according to the present invention described above. Due to these properties, the cross-linked rubber according to the present invention can be used in the following various applications, for example: materials for tire parts; materials for various industrial products such as hoses, belts, mats, antivibration rubber, and others; rebound resilience improvers for resins; resin film buffers; shoe soles; rubber shoes; golf balls; toys; and the like. In particular, taking advantage of such excellent frictional performance on ice and compatibility with water, the cross-linked rubber according to the present invention may be suitably used for tires and shoe sole rubber, for example.

### EXAMPLES

Hereinafter, the present invention will be described further specifically by way of Examples and Comparative Example, but the present invention is not limited to only these Examples. The term "parts" is weight-based unless otherwise specified.

The test methods performed in Examples and Comparative Example are as follows.

### <Monomer composition, vinyl bond content>

A monomer composition of a diene polymer rubber and a vinyl bond content (mol%) in a diene monomer unit were determined by the ¹H-NMR method in accordance with JIS K6239:2007.

### <Mooney viscosity of diene polymer rubber>

For the diene polymer rubber, the Mooney viscosity (ML1+4) was measured in accordance with JIS K6300-1:2013 under the following conditions.
▪ Test temperature: 100°C
▪ Type of rotor: L-shape
▪ Tester used: Shimadzu Mooney Viscometer SMV-301 available from Shimadzu Corporation

### <Glass transition temperature (Tg) of diene polymer rubber>

The glass transition temperature (Tg) of the diene polymer rubber was determined using a differential scanning calorimeter (DSC, X-DSC7000 available from Hitachi High-Tech Science Corporation) from -150°C to 40°C at a temperature increase rate of 10°C/min.

### <Frictional performance on ice of cross-linked rubber>

Each of rubber compositions in Examples and Comparative Example was formed into a test piece having a diameter of 50 mm and a thickness of 10 mm. After 1-hour cross-linking at 160°C, the test piece was pressed onto fixed ice and rotated. A friction force generated in the rotation was detected by a load cell, and the friction force detected was used to calculate the coefficient of dynamic friction µ. The measurement temperature was -2°C, the surface pressure was 12 kgf/cm², and the sample rotational peripheral speed was 20 cm/sec. The measurement results were indicated as an index where the coefficient of dynamic friction µ of Comparative Example 1 was regarded as 100. A greater index value indicates a larger coefficient of dynamic friction µ, which means the frictional performance on ice was better (the coefficient of friction on ice was higher and better).

### <Sliding angle of cross-linked rubber>

Each of the rubber compositions in Examples and Comparative Example was formed into a test plate of 20 mm × 30 mm (thickness: 2mm). After 20-minute cross-linking at 160°C, 2 µL of a water droplet was dropped onto the test plate. The test plate was gradually tilted at a constant speed, and the angle at which the water droplet started to slide was measured as a sliding angle (dynamic contact angle). A greater sliding angle indicates better wettability by water and higher compatibility with water. The rubber components contained in Examples 4 to 6 are diene polymer rubbers (A-1) to (A-3) only, respectively. Therefore, it is believed that the sliding angle of each of the diene polymer rubbers (A-1) to (A-3) is in the same range.

### <Example 1>

To a reactor, 200 parts of ion exchanged water, 4.5 parts of disproportionated potassium rosin acid/sodium fatty acid, 0.1 parts of potassium chloride, 10 parts of methoxyethyl acrylate, and 0.3 parts of t-dodecylmercaptan (molecular weight modifier) were loaded in this order. The gas inside was replaced with nitrogen three times, and then 90 parts of 1,3-butadiene was loaded. Then, while the reactor was kept at 10°C, 0.1 parts of diisopropylbenzene hydroperoxide (polymerization initiator), a reducing agent, and an appropriate amount of a chelating agent were loaded, and the polymerization reaction was started with stirring. The polymerization reaction was continued with stirring, and at the point where the polymerization conversion ratio reached 75%, 0.2 parts of diethylhydroxylamine (polymerization terminator) was added to terminate the polymerization reaction. After the polymerization reaction was terminated, residual monomers were removed at a water temperature of 60°C under reduced pressure, and then 0.5 parts of alkylated phenol as an antioxidant was added. Then, a polymer latex obtained was added in a calcium chloride aqueous solution to perform coagulation, resulting in a polymer in the form of crumb. Next, after the obtained polymer in the form of crumb was taken out and rinsed with water, it was dried at 60°C under reduced pressure to give a diene polymer rubber (A-1).

The diene polymer rubber (A-1) obtained contained 91% by weight of 1,3-butadiene units and 9% by weight of methoxyethyl acrylate units. The vinyl bond content in the 1,3-butadiene units was 16 mol%. The Mooney viscosity (ML1+4) was 55, and the glass transition temperature (Tg) was -76°C.

### <Example 2>

A diene polymer rubber (A-2) was obtained by polymerization in the same manner as in Example 1 except that the amount of methoxyethyl acrylate used and the amount of 1,3-butadiene used were changed to 20 parts and 80 parts, respectively.

The diene polymer rubber (A-2) obtained contained 82% by weight of 1,3-butadiene units and 18% by weight of methoxyethyl acrylate units. The vinyl bond content in the 1,3-butadiene units was 15 mol%. The Mooney viscosity (ML1+4) was 43, and the glass transition temperature (Tg) was -72°C.

### <Example 3>

A diene polymer rubber (A-3) was obtained by polymerization in the same manner as in Example 1 except that the amount of methoxyethyl acrylate used and the amount of 1,3-butadiene used were changed to 5 parts and 95 parts, respectively.

The diene polymer rubber (A-3) obtained contained 95% by weight of 1,3-butadiene units and 5% by weight of methoxyethyl acrylate units. The vinyl bond content in the 1,3-butadiene units was 16 mol%. The Mooney viscosity (ML1+4) was 65, and the glass transition temperature (Tg) was -78°C.

### <Example 4>

In a Brabender type mixer having a volume of 250 ml, 100 parts of the diene polymer rubber (A-1) obtained in Example 1 was masticated for 30 seconds. Next, 50 parts of silica (available from TOSOH SILICA CORPORATION, product name, "Nipsil AQ") and 4 parts of a silane coupling agent: bis(3-triethoxysilylpropyl)polysulfide (available from Shin-Etsu Chemical Co., Ltd.) were added, and the mixture was kneaded at a starting temperature of 110°C for 1.5 minutes. 3 Parts of zinc oxide (zinc flower), 2 parts of stearic acid, and 2 parts of an antioxidant: N-phenyl-N'-(1,3-dimethylbutyl)-p-phenylenediamine (available from OUCHI SHINKO CHEMICAL INDUSTRIAL CO., LTD, product name, "NOCRAC 6C") were added to the mixture. The mixture was further kneaded for 2.5 minutes, and the kneaded product was discharged from the mixer. The temperature of the kneaded product at the end of kneading was 150°C. After cooled to room temperature, the kneaded product obtained was kneaded again in the Brabender type mixer at a starting temperature of 110°C for 2 minutes, and was then discharged from the mixer. Subsequently, to the kneaded product obtained, 1.4 parts of sulfur and 1 part of a cross-linking accelerator: N-cyclohexyl-2-benzothiazolylsulfenamide (available from OUCHI SHINKO CHEMICAL INDUSTRIAL CO., LTD, product name, "NOCCELER CZ-G") were added and these were kneaded using open rolls at 50°C, and then a sheet-shaped rubber composition was obtained.

Then, using the rubber composition obtained, the frictional performance on ice of the cross-linked rubber and the sliding angle of the cross-linked rubber were evaluated. The results are shown in Table 1.

### <Example 5>

A rubber composition was obtained in the same manner as in Example 4 except that 100 parts of the diene polymer rubber (A-2) obtained in Example 2 was used instead of 100 parts of the diene polymer rubber (A-1) obtained in Example 1, and was evaluated in the same manner. The results are shown in Table 1.

### <Example 6>

A rubber composition was obtained in the same manner as in Example 4 except that 100 parts of the diene polymer rubber (A-3) obtained in Example 3 was used instead of 100 parts of the diene polymer rubber (A-1) obtained in Example 1, and was evaluated in the same manner. The results are shown in Table 1.

### <Example 7>

A rubber composition was obtained in the same manner as in Example 4 except that the amount of the diene polymer rubber (A-1) obtained in Example 1 was changed from 100 parts to 50 parts, and 25 parts of butadiene rubber (available from UBE Corporation, product name "UBEPOL BR150L") and 25 parts of natural rubber were further added, and was evaluated in the same manner. The results are shown in Table 1. The timing of addition of the butadiene rubber and the natural rubber was the same as that of the diene polymer rubber (A-1). In Example 7, the rubber composition was obtained by masticating the diene polymer rubber (A-1), the butadiene rubber, and the natural rubber and then adding compounding agents.

### <Comparative Example 1>

A rubber composition was obtained in the same manner as in Example 4 except that 50 parts of butadiene rubber (available from UBE Corporation, product name "UBEPOL BR150L") and 50 parts of natural rubber were used instead of 100 parts of the diene polymer rubber (A-1) obtained in Example 1, and was evaluated in the same manner. The results are shown in Table 1. In Comparative Example 1, the rubber composition was obtained by masticating the butadiene rubber and the natural rubber and then adding compounding agents.

### [Table 1]

**Table 1**

| | | Example 4 | Example 5 | Example 6 | Example 7 | Comparative Example 1 |
|---|---|---|---|---|---|---|
| Component (Parts) | Diene polymer rubber (A-1) (Methoxyethyl acrylate unit content: 9 wt%, Tg: -76°C) | 100 | 0 | 0 | 50 | 0 |
| | Diene polymer rubber (A-2) (Methoxyethyl acrylate unit content: 18 wt%, Tg: -72°C) | 0 | 100 | 0 | 0 | 0 |
| | Diene polymer rubber (A-3) (Methoxyethyl acrylate unit content: 5 wt%, Tg: -78°C) | 0 | 0 | 100 | 0 | 0 |
| | Butadiene rubber | 0 | 0 | 0 | 25 | 50 |
| | Natural rubber | 0 | 0 | 0 | 25 | 50 |
| | Silica | 50 | 50 | 50 | 50 | 50 |
| | Silane coupling agent | 4 | 4 | 4 | 4 | 4 |
| | Stearic acid | 2 | 2 | 2 | 2 | 2 |
| | Antioxidant | 2.0 | 2.0 | 2.0 | 2.0 | 2.0 |
| | Sulfur | 1.4 | 1.4 | 1.4 | 1.4 | 1.4 |
| | Zinc flower | 3 | 3 | 3 | 3 | 3 |
| | Vulcanization accelerator | 1 | 1 | 1 | 1 | 1 |
| Evaluation | Frictional performance on ice | 137 | 163 | 122 | 118 | 100 |
| | Sliding angle (°) | 48 | 52 | 45 | 43 | 37 |

As shown in Table 1, the cross-linked rubbers optained by using the diene polymer rubbers containing 1 to 40% by weight of the (meth)acrylic acid ester monomer units had excellent frictional performance on ice and large sliding angles, and showed high compatibility with water (Examples 4 to 7).

## Claims

1. A diene polymer rubber comprising a diene monomer unit and a (meth)acrylic acid ester monomer unit,
wherein a content of the (meth)acrylic acid ester monomer unit is 1 to 40% by weight.

2. The diene polymer rubber according to claim 1, wherein the diene polymer rubber has a glass transition temperature of -100 to - 50°C.

3. The diene polymer rubber according to claim 1 or 2, wherein the (meth)acrylic acid ester monomer unit is a (meth)acrylic acid alkoxyalkyl ester monomer unit.

4. The diene polymer rubber according to any one of claims 1 to 3, wherein the diene polymer rubber has a sliding angle of 38° or more.

5. A method for producing the diene polymer rubber according to any one of claims 1 to 4, comprising:
polymerizing a monomer mixture comprising a diene monomer and a (meth)acrylic acid ester monomer in the presence of an emulsifier in an aqueous medium.
